# EUROPEAN PATENT APPLICATION

(11) **EP 4 113 732 A1**
(43) Date of publication of application: **04.01.2023**
(21) Application number: 22773586.7
(22) Date of filing: 24.03.2022
(51) Int. Cl.: H01M 50/533, H01M 50/536, H01M 10/04

(54) **CYLINDRICAL BATTERY CELL, BATTERY, AND POWER CONSUMING DEVICE**

(30) Priority: 26.04.2021 CN 202120877288 U
(71) Applicant: Contemporary Amperex Technology Co., Limited, Ningde City, Fujian 352100 (CN)
(72) Inventor: SU, Huasheng, Ningde City, Fujian 352100 (CN); XING, Chengyou, Ningde City, Fujian 352100 (CN); QIN, Yanyun, Ningde City, Fujian 352100 (CN); LI, Quankun, Ningde City, Fujian 352100 (CN); SHI, Kaiyue, Ningde City, Fujian 352100 (CN)
(74) Representative: Rowlands, Stuart Michael
(86) International application number: PCT/CN2022/082756
(87) International publication number: WO 2022/227961

(57) **Abstract**

The present application relates to a cylindrical battery cell, a battery and a power device, and belongs to the field of battery technology. A cylindrical battery cell includes an adapter for electrically connecting an electrode assembly and an electrode terminal, the adapter including a first switching part and a second switching part, a first crease being provided between the first switching part and the second switching part, the first switching part including a welding area for welding with the electrode assembly, the welding area extending in a direction parallel to the first crease. In the cylindrical battery cell, the welding of the adapter and the electrode assembly is simple, the operation is convenient, and the production efficiency is improved.

## Description

### Cross-Reference to Related Application

The present application claims priority to Chinese patent application CN 202120877288.6 filed on April 26, 2021, entitled "Cylindrical battery cell, battery and electric device", the entire content of which is incorporated herein by reference.

### Technical Field

The present application relates to the field of battery technology, in particular to a cylindrical battery cell, a battery and an electric device.

### Background Art

Energy saving and emission reduction is the key to the sustainable development of the automobile industry. Electric vehicles, because of their advantages of energy saving and environmental protection, have become an important part of the sustainable development of the automobile industry. Battery technology is an important factor in the development of electric vehicles.

The electrode terminal of the battery cell is connected with the electrode assembly through an adapter, so that the electrical energy of the electrode assembly can be output through the electrode terminal. In the prior art, during the battery production process, the welding of the adapter and the electrode assembly is complicated, and the production efficiency needs to be improved.

### Summary

An object of the present application is to provide a cylindrical battery cell, by which welding of an adapter and an electrode assembly is simplified, the operation is made convenient, and the production efficiency is improved.

The present application is achieved through the following technical solutions.

In a first aspect, the present application provides a cylindrical battery cell, comprising:
an adapter for electrically connecting an electrode assembly and an electrode terminal, the adapter including a first switching part and a second switching part, a first crease being provided between the first switching part and the second switching part, the first switching part including a welding area for welding with the electrode assembly, the welding area extending in a direction parallel to the first crease.

According to the cylindrical battery cell of an embodiment of the present application, the extending direction of the welding area of the first switching part is parallel to the first crease, namely, the welding area extends in a straight line, so that the adapter and the electrode assembly can be welded along a straight path. The welding operation is simple and convenient, thus saving time and improving production efficiency.

In some embodiments of the present application, both ends of the welding area extend to an edge of the first switching part.

In the above embodiments, the welding area is arranged in such a manner that the welding area has a relatively large length, which ensures a larger contact area between the welding area and the electrode assembly, ensures connection stability, and improves overcurrent capability.

In some embodiments of the present application, the first switching part further includes a non-welding area having a first surface facing the electrode assembly and a second surface facing away from the electrode assembly, the welding area protruding from the first surface.

In the above embodiments, the welding area protrudes from the first surface to ensure the contact between the welding area and a tab of the electrode assembly, so as to facilitate connection and fixation of the first switching part and the electrode assembly.

In some embodiments of the present application, a protruding height of the welding area from the first surface is 0.3-0.7 mm.

In the above embodiments, the protruding height of the welding area is selected to ensure quality of welding with the tab, and to avoid occupying relatively large assembly space; if the protruding height of the welding area is small, the welding area is in poor contact with the tab, affecting the welding quality of the welding area and the tab; and if the protruding height of the welding area is great, the first switching part occupies relatively large assembly space, affecting energy density of the cylindrical battery cell.

In some embodiments of the present application, the welding area is recessed in the second surface.

In the above embodiments, the structural form of the welding area defines the welding contour, which facilitates welding operation.

In some embodiments of the present application, the welding area includes a plurality of sub-welding areas arranged at an interval along a direction perpendicular to the first crease.

In the above embodiments, the arrangement of the plurality of sub-welding areas ensures the connection stability between the first switching part and the electrode assembly.

In some embodiments of the present application, the plurality of sub-welding areas include a first sub-welding area and a second sub-welding area that are adjacent, the first sub-welding area and the second sub-welding area being respectively located on both sides of a winding axis of the electrode assembly, a distance between the first sub-welding area and the second sub-welding area being smaller than a diameter of a winding center hole of the electrode assembly.

In the above embodiments, setting the distance between the first sub-welding area and the second sub-welding area to be smaller than the diameter of the winding center hole can prevent an excessively large distance between the first sub-welding area and the second sub-welding area during welding, which causes the welding area not to be welded with a tab of the electrode assembly close to the winding center hole. Thus, contact of the adapter with more tabs is ensured, and the overcurrent capability of the adapter is enhanced.

In some embodiments of the present application, a width of the first switching part at the first crease is equal to a width of the second switching part at the first crease, where a dimension of the first switching part along the direction parallel to the first crease is defined as the width of the first switching part, and a dimension of the second switching part along the direction parallel to the first crease is defined as the width of the second switching part.

In the above embodiments, the width of the second switching part at the first crease is equal to the width of the first switching part at the first crease, which increases the overcurrent capability of the adapter at the first crease.

In some embodiments of the present application, the width of the second switching part at other positions is not less than the width of the second switching part at the first crease.

In the above embodiments, the structural form of the second switching part renders the second switching part to have a wider width, so as to ensure that the adapter has a larger overcurrent area and to improve the overcurrent capability of the adapter.

In some embodiments of the present application, the adapter further includes a third switching part for connecting with the electrode terminal, a second crease being provided between the third switching part and the second switching part.

In a second aspect, the present application also provides a battery including the cylindrical battery cell described above.

In a third aspect, the present application also provides an electric device including the battery described above.

Additional aspects and advantages of the present application will be set forth, in part, from the following description, and will in part become apparent from the following description, or may be appreciated by practice of the present application.

### Brief Description of Drawings

In order to illustrate the technical solutions of the examples of the present application more clearly, the drawings to be used in the examples will be briefly introduced below. It should be understood that the following drawings merely show some examples of the present application, and therefore should not be regarded as a limitation of the scope. For those of ordinary skill in the art, other related drawings can also be obtained according to these drawings without any creative effort.
FIG. 1 is a schematic structural view of a vehicle provided by an example of the present application;
FIG. 2 is schematic structural view of a battery provided by an example of the present application;
FIG. 3 is an exploded view of a cylindrical battery cell provided by an example of the present application;
FIG. 4 is a schematic view of a connection between an adapter of a cylindrical battery cell provided by an example of the present application before being bent and an end cover;
FIG. 5 is a schematic view of an adapter of a cylindrical battery cell provided by an example of the present application after being bent;
FIG. 6 is a partial schematic view of an adapter of a cylindrical battery cell provided by an example of the present application before being bent;
FIG. 7 is a schematic structural view of an adapter of a cylindrical battery cell provided by another example of the present application before being bent;
FIG. 8 shows a partially exploded view of a cylindrical battery cell according to an example of the present application;
FIG. 9 is a schematic structural view of a first switching part of an adapter of a cylindrical battery cell provided by an example of the present application; and
FIG. 10 is a schematic structural view of a first switching part of an adapter of a cylindrical battery cell provided by another example of the present application.

In the drawings, the drawings are not depicted in an actual scale.

Description of reference signs: 100-battery; 11-case; 111-first part; 112-second part; 12-cylindrical battery cell; 120-housing; 1201-end opening; 121-end cover; 122-electrode terminal; 123-electrode assembly; 1231-winding center hole; 1232-winding axis; 124-adapter; 1241-first switching part; 1242-second switching part; 1243-third switching part; 1244-first crease; 1245-second crease; 1246-welding area; 1246a-first sub-welding area; 1246b-second sub-welding area; 1247-non-welding area; 12471-first surface; 12472-second surface; 1248-positioning hole; 1249-reinforcing rib; 200-motor; 300-controller; and 1000-vehicle.

### Detailed Description of the Embodiments

In order to make the objects, technical solutions, and advantages of the examples of the present application clearer, the technical solutions in the examples of the present application will be described clearly and completely below with reference to the drawings in the examples of the present application. It is apparent that the described examples are a part of the examples of the present application, but not all of the examples. Generally, the components of the examples of the present application described and shown in the drawings herein may be arranged and designed in a variety of different configurations.

Unless otherwise defined, all technical and scientific terms used herein have the same meaning as commonly understood by one of ordinary skill in the technical field of the present application. The terms used herein in the specification of the present application are intended to describe specific examples only, but not intended to limit the application. The terms "comprise", "have" and any variations thereof in the specification, claims, and the above description of the drawings of the present application are intended to encompass the non-exclusive inclusion.

The "example" mentioned herein means that a particular feature, structure, or characteristic described in accordance with an example can be included in at least one example of the present application. The appearances of this word in various places in the specification do not necessarily all refer to the same example, nor a separate or alternative example that is mutually exclusive of other examples. It is explicitly and implicitly understood by those skilled in the art that the examples described herein may be combined with other examples.

It should be noted that similar reference signs and letters refer to similar items in the following drawings. Thus, once a certain item is defined in one drawing, further definition and explanation for this item are not required in subsequent drawings.

In the description of the present application, it is to be understood that the terms "center", "length", "width", "thickness", "bottom", "inner", "outer", "circumferential", and the like, which refer to the orientation or the positional relationship based on the orientation or positional relationship shown in the drawings, are only used for the convenience of describing the present application and simplifying the description, rather than indicating or implying that the referred device or element must have a specific orientation and be configured and operated in a specific orientation, and thus, these terms should not be construed as a limitation of the present application. In addition, the terms "first", "second", and the like in the specification and claims or the above drawings of the present application are used for distinguishing different objects, rather than describing a specific order, and may expressly or implicitly include one or more of this feature. In the description of the present application, unless stated otherwise, "a plurality of" means two or more.

In the description of the present application, it should be noted that, unless otherwise expressly specified and limited, the terms "install", "connect", and "connection" should be understood in a broad sense. For example, the connection may be a fixed connection, or may also be a detachable connection or integral connection; the connection may be mechanical connection, or may also be electrical connection; the connection may be direct connection, may also be indirect connection through an intermediate medium, or may be internal communication between two elements. For those of ordinary skill in the art, the specific meanings of the above terms in the present application can be understood in specific situations.

In the present application, the battery cells may include a lithium-ion secondary battery, a lithium-ion primary battery, a lithium-sulfur battery, a sodium-lithium-ion battery, a sodium-ion battery, a magnesium-ion battery, or the like, and the examples of the present application are not limited thereto. The battery cell may be in the form of a cylinder, a flat shape, a rectangular parallelepiped shape, or other shapes, and the examples of the present application are not limited thereto. Battery cells are generally divided into three types according to the packaging method: cylindrical battery cells, square battery cells, and soft pack battery cells. The battery cell mentioned in the examples of the present application is a cylindrical battery cell.

The battery mentioned in the examples of the present application refers to a single physical module including one or more battery cells to provide higher voltage and capacity. For example, the battery mentioned in the present application may include a battery module, a battery pack, or the like. A battery typically includes a case for packaging one or more battery cells. The case can prevent liquids or other foreign objects from affecting the charging or discharging of the battery cells.

A battery cell includes an electrode assembly and an electrolyte, and the electrode assembly is composed of a positive electrode, a negative electrode, and a separator. The battery cell operates mainly relying on the movement of metal ions between the positive electrode and the negative electrode. The positive electrode includes a positive electrode current collector and a positive electrode active material layer. The positive electrode active material layer is coated on the surface of the positive electrode current collector, and a part of the current collector that is not coated with the positive electrode active material layer protrudes from a part of the current collector coated with the positive electrode active material layer. The part of current collector that is not coated with the positive electrode active material layer is used as the positive electrode tab. Taking a lithium-ion battery as an example, the material of the positive electrode current collector may be aluminum, and the positive electrode active material may be lithium cobalt oxide, lithium iron phosphate, ternary lithium, lithium manganite, or the like. The negative electrode includes a negative electrode current collector and a negative electrode active material layer. The negative electrode active material layer is coated on the surface of the negative electrode current collector. A part of the current collector that is not coated with the negative electrode active material layer protrudes from a part of the current collector coated with the negative electrode active material layer. The part of the current collector that is not coated with the negative electrode active material layer is used as the negative electrode tab. The material of the negative electrode current collector may be copper, and the negative electrode active material may be carbon or silicon. In order to ensure that a large current is passed without fusing, the number of positive electrode tabs is multiple and multiple positive electrode tabs stack together, and the number of negative electrode tabs is multiple and multiple negative electrode tabs stack together. The material of the separator may be polypropylene (PP), polyethylene (PE), or the like. In addition, the electrode assembly may be a wound structure or a laminated structure. The electrode assembly mentioned in the examples of the present application is a wound structure.

The battery cell further includes an adapter and an electrode terminal. The adapter is used to connect the electrode assembly with the electrode terminal, so as to output electric energy of the electrode assembly through the electrode terminal. Correspondingly, the electrode terminal connected to the positive electrode tab is a positive electrode terminal, and the electrode terminal connected to the negative electrode tab is a negative electrode terminal. In order to facilitate the assembly of the battery cell and save the space occupied by the adapter, the form of the adapter is generally bent to reduce the assembly height.

In the prior art, in the battery production process, the welding operation of the adapter and the electrode assembly is relatively complicated, resulting in a low assembly efficiency of the battery cell.

The inventors found that the reason why the welding operation of the adapter and the electrode assembly is complicated is that the welding path is complicated. Since the electrode assembly of the cylindrical battery cell is of a wound structure, in the battery production process, in order to ensure that the adapter can be welded with most rounds of the tabs of the electrode assembly, the welding path between the adapter and the electrode assembly is generally set in a V shape or a U shape, which makes the welding operation relatively complicated, takes a long time, and affects the production efficiency.

In view of this, the present application provides a cylindrical battery cell having an adapter including a first switching part and a second switching part, and a first crease is provided between the first switching part and the second switching part. The first switching part includes a welding area for welding with an electrode assembly, and an extending direction of the welding area is parallel to the first crease, so that the welding path is straight. Thus, the welding operation is simple and convenient, and the welding time is saved, leading to improved production efficiency.

The technical solutions described in the examples of the present application are applicable to various electric devices using batteries, such as mobile phones, portable devices, notebook computers, battery cars, electric toys, electric tools, electric vehicles, ships, spacecraft, and the like. For example, the spacecraft includes airplanes, rockets, space shuttles, and spaceships.

It should be understood that the technical solutions described in the examples of the present application are not only applicable to the above-described devices, but also applicable to all devices using a battery. However, for the sake of brevity, the following examples are described by taking an electric vehicle as an example.

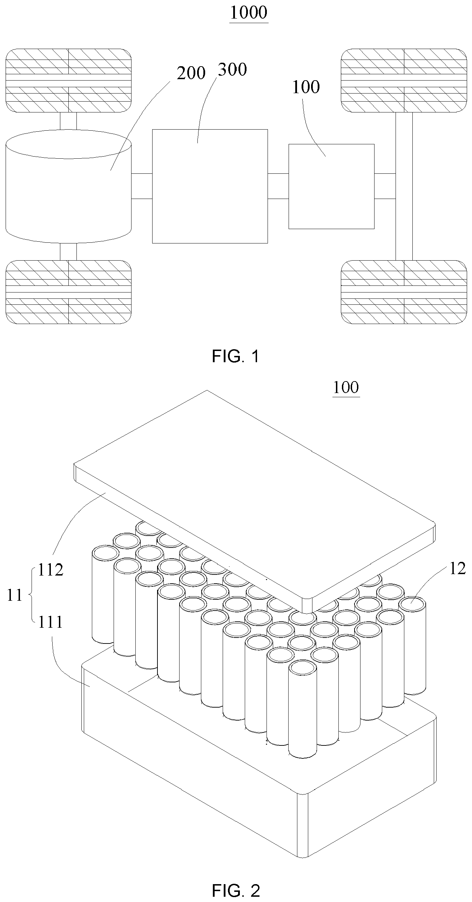

For example, FIG. 1 shows a schematic structural view of a vehicle 1000 according to an example of the present application. The vehicle 1000 may be a fuel vehicle, a gas vehicle, or a new energy vehicle, and the new energy vehicle may be a pure electric vehicle, a hybrid vehicle, an extended range vehicle, or the like. The vehicle 1000 is provided with a battery 100 inside. For example, the battery 100 may be provided at the bottom, front, or rear of the vehicle 1000. The battery 100 may be used for power supply of the vehicle 1000. For example, the battery 100 may be used, as an operating power source of the vehicle 1000, for a circuit system of the vehicle 1000, such as for operation power demands for starting, navigating and running of the vehicle 1000. In another example of the present application, the battery 100 can not only be used as an operating power source of the vehicle 1000, but also can be used as a driving power source of the vehicle 1000 to provide driving force for the vehicle 1000 instead of or partially instead of fuel or natural gas.

The vehicle 1000 may also be provided with a motor 200 and a controller 300 inside. The controller 300 is used to control power supply of battery 100 to the motor 200, for example, for operation power demands for starting, navigating and running of the vehicle 1000.

In order to meet different power demands, the battery 100 may include a plurality of battery cells, wherein the plurality of battery cells may be connected in series, in parallel, or in a mixed connection which refers to a mixture of series and parallel connection. The battery 100 may also be referred to as a battery pack. In some examples, the plurality of battery cells may be connected in series, in parallel, or in a mixed connection to form a battery module, and then a plurality of battery modules may be connected in series, in parallel, or in a mixed connection to form the battery 100. Namely, the plurality of battery cells may directly form the battery 100, or may form a battery module first, and then the battery modules may form the battery 100.

FIG. 2 shows a schematic structural view of the battery 100 according to an example of the present application. In FIG. 2, the battery 100 may include a case 11 and a plurality of cylindrical battery cells 12, the interior of the case 11 is a hollow structure, and the plurality of cylindrical battery cells 12 are accommodated in the interior of the case 11. The case 11 includes a first part 111 and a second part 112. The first part 111 includes an accommodating space with an opening. The second part 112 is used to cover the opening of the accommodating space, so as to connect with the first part 111 to form an accommodating cavity for housing the plurality of cylindrical battery cells 12.

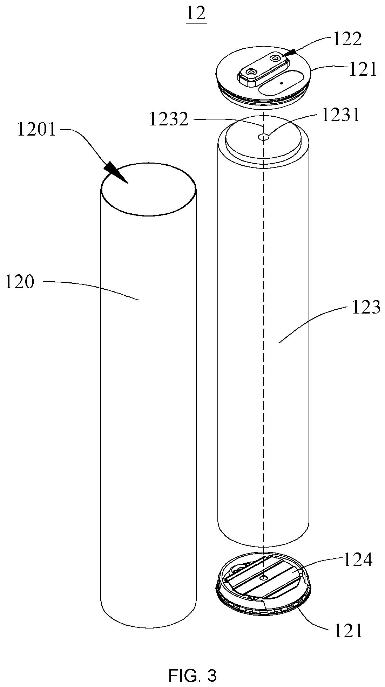

FIG. 3 shows an exploded view of the cylindrical battery cell 12 according to an example of the present application. As shown in FIG. 3, the cylindrical battery cell 12 includes two electrode terminals 122, an electrode assembly 123, and two adapters 124. The two electrode terminals 122 are respectively a positive electrode terminal and a negative electrode terminal. The positive electrode terminal is used to connect with the positive electrode tab of the electrode assembly 123, and the negative electrode terminal is used to connect with the negative electrode tab of the electrode assembly 123. Two adapters 124 are provided. The positive electrode terminal corresponds to one of the two adapters 124, and the negative electrode terminal corresponds to the other of the two adapters 124. The adapters 124 are used to connect the electrode assembly 123 with the electrode terminal 122 and used to output the electric energy of the electrode assembly 123 through the electrode terminal 122.

As shown in FIG. 3, the cylindrical battery cell 12 further includes a housing 120 and an end cover 121. The housing 120 has an end opening 1201, and the electrode assembly 123 and the adapters 124 are provided in the housing 120. The end cover 121 is used to cover the end opening 1201 and is connected to the housing 120 to form a closed cavity in which the electrode assembly 123 can be placed. The housing 120 is filled with an electrolyte, such as an electrolytic solution.

The housing 120 has two end openings 1201 that are opposite to each other, and the two end openings 1201 correspond to the positive electrode tab and the negative electrode tab of the electrode assembly 123 respectively. Two end covers 121 are provided, and each of the end covers 121 corresponds to one of the end openings 1201. The two electrode terminals 122 correspond to the two end covers 121, respectively. The positive electrode terminal is provided on one of the end covers 121, and the negative electrode terminal is provided on the other of the end covers 121.

In the present application, a positive electrode, a separator, and a negative electrode are stacked on each other and wound around a winding axis 1232 to form the electrode assembly 123 of wound type. The positive electrode and the negative electrode are separated by the separator. After winding is completed to form the electrode assembly 123, the electrode assembly 123 formed has a winding center hole 1231.

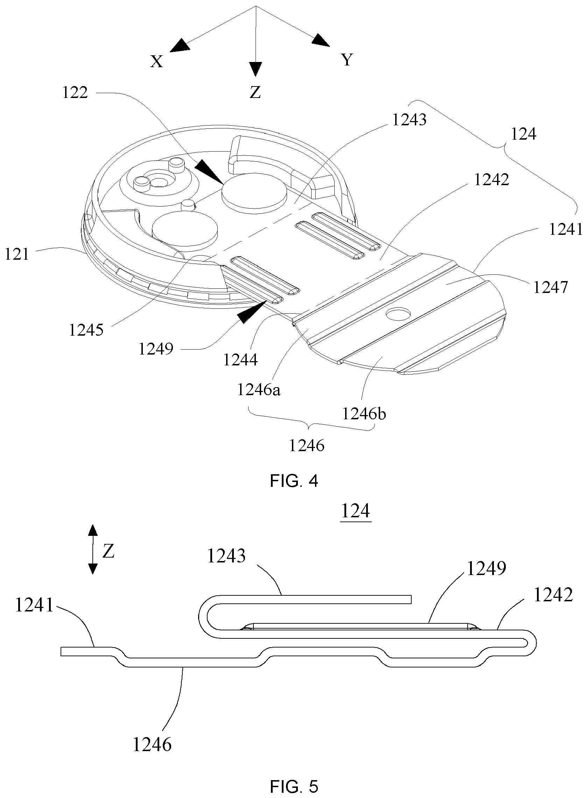

FIG. 4 shows a schematic view of a connection between the adapter 124 of the cylindrical battery cell 12 according to an example of the present application before being bent and the end cover 124. As shown in FIG. 4, before the adapter 124 is bent, the adapter 124 is in an unfolded state. The adapter 124 includes a first switching part 1241 and a second switching part 1242, and a first crease 1244 is provided between the first switching part 1241 and the second switching part 1242. The first switching part 1241 includes a welding area 1246 for welding with the electrode assembly 123 (see FIG. 3), and the welding area 1246 extends in a direction parallel to the first crease 1244. Before the adapter 124 is bent, the first switching part 1241 and the second switching part 1242 are sequentially arranged along a Y direction of the adapter 124. After the adapter 124 is bent, namely, the second switching part 1242 is bent relative to the first switching part 1241, the first crease 1244 is formed between the first switching part 1241 and the second switching part 1242. It should be pointed out that an X direction in FIG.4 indicates the direction parallel to the first crease 1244, that is, a width direction of the adapter 124; and the Y direction indicates the direction perpendicular to the first crease 1244, that is, a length direction of the adapter 124.

The welding area 1246 is an area of the first switching part 1241 for welding with the tabs of the electrode assembly 123. The extending direction of the welding area 1246 is parallel to the extending direction of the first crease 1244, namely, the welding area 1246 extends in a straight line along the X direction. When the adapter 124 and the electrode assembly 123 are welded, the welding operation is performed in the welding area 1246. The welding path is a straight line. The operation is simple and convenient, and the welding difficulty is low, achieving saving of the time and improvement of the production efficiency.

It should be pointed out that, in order to match the shape of the end face of the electrode assembly 123, the first switching part 1241 is approximately a disk-shaped structure, and the first switching part 1241 has a roughly circular contour. The size of the first switching part 1241 is substantially the same as the size of the end face of the electrode assembly 123, so as to ensure connection area between the first switching part 1241 and the electrode assembly 123 and thus to ensure the overcurrent capability. It can be understood that the first crease 1244 is a chord line of the circular contour of the first switching part 1241.

In some examples of the present application, as shown in FIG. 4, the second switching part 1242 is provided with a reinforcing rib 1249 to increase the strength of the second switching part 1242 and facilitate the bending of the second switching part 1242 relative to the first switching part 1241. The reinforcing rib 1249 may be integrally formed with the second switching part 1242, or may be welded or adhered through conductive glue to the second switching part 1242. Optionally, in order to facilitate processing, the reinforcing rib 1249 may be integrally formed with the second switching part 1242.

In some examples of the present application, the reinforcing rib 1249 extends along the Y direction to increase the strength of the second switching part 1242 in the Y direction, so as to facilitate guiding the bending of the second switching part 1242 relative to the first switching part 1241.

In some examples of the present application, a plurality of reinforcing ribs 1249 are provided, and the plurality of reinforcing ribs 1249 are arranged at an interval along the X direction. Arrangement of the plurality of reinforcing ribs 1249 can effectively increase the strength of the second switching part 1242, so that the second switching part 1242 and the first switching part 1241 are bent at the first crease 1244.

In some examples of the present application, as shown in FIG. 4, the adapter 124 further includes a third switching part 1243 for connecting with the electrode terminal 122. A second crease 1245 is provided between the third switching part 1243 and the second switching part 1242. Before the adapter 124 is bent, the second switching part 1242 is located between the first switching part 1241 and the third switching part 1243, and the first switching part 1241, the second switching part 1242, and the third switching part 1243 are connected successively along the Y direction. When the adapter 124 is bent, the second switching part 1242 is bent relative to the first switching part 1241 to form the first crease 1244, and the third switching part 1243 is bent relative to the second switching part 1242 to form the second crease 1245. Bending twice allows the total thickness of the adapter 124 to adapt to the assembly of the cylindrical battery cell 12, so as to avoid interference from other components to the adapter 124.

FIG. 5 shows a schematic view of the adapter 124 of the cylindrical battery cell 12 according to an example of the present application after being bent. As shown in FIG. 5, after the adapter 124 is bent, the first switching part 1241 and the third switching part 1243 are located on both sides of the second switching part 1242 along the Z direction. It should be point out that, in FIG.5, the Z direction is a thickness direction of the second switching part 1242, that is, the thickness direction of the adapter 124 in the unfolded state.

In some examples of the present application, the second crease 1245 and the first crease 1244 are arranged in parallel to reduce the space occupied by the adapter 124 after being bent, and thereby the assembly space is saved, and the energy density of the cylindrical battery cell is ensured.

In some examples of the present application, the first switching part 1241, the second switching part 1242, and the third switching part 1243 are integrally formed to facilitate processing.

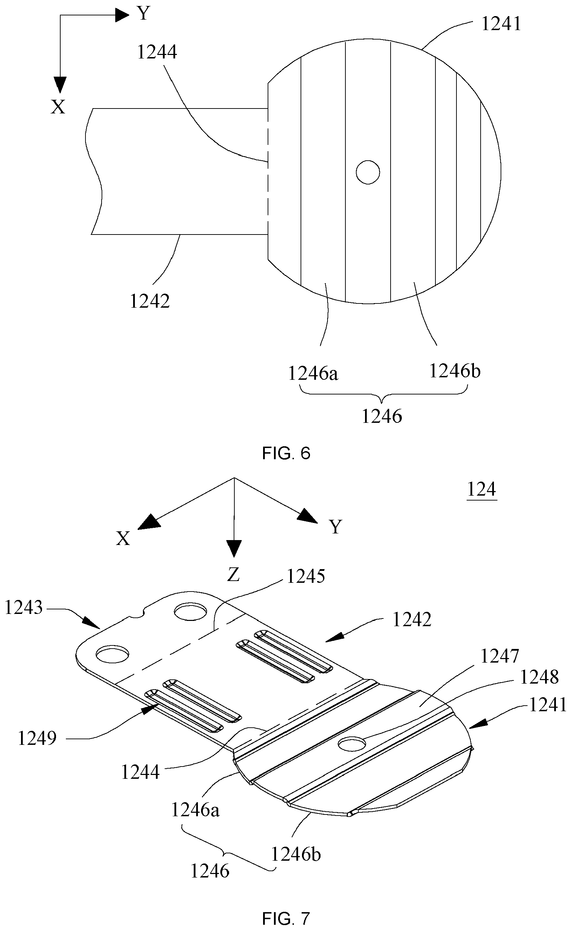

FIG. 6 is a partial schematic view of the adapter 124 of the cylindrical battery cell 12 according to an example of the present application before being bent. In some examples of the present application, as shown in FIG. 6, the width of the second switching part 1242 at the first crease 1244 may be smaller than the width of the first switching part 1241 at the first crease 1244, namely, the width of the second switching part 1242 at the first crease 1244 is smaller than the length of the chord line of the circular contour of the first switching part 1241. Here, the dimension of the second switching part 1242 along the X direction is the width of the second switching part 1242.

FIG. 7 shows a schematic structural view of the adapter 124 of the cylindrical battery cell 12 according to another example of the present application before being bent. In some examples of the present application, as shown in FIG. 7, the width of the first switching part 1241 at the first crease 1244 is equal to the width of the second switching part 1242 at the first crease 1244, namely, the width of the second switching part 1242 at the first crease 1244 is equal to the length of the chord line of the circular contour of the first switching part 1241. Here, the dimension of the first switching part 1241 along the X direction is the width of the first switching part 1241. In the example shown in FIG. 7, the width of the second switching part 1242 at the first crease 1244 is larger, the overcurrent capability, at the first crease 1244, of the adapter 124 is stronger, and the internal resistance of the adapter 124 is smaller, compared with the example shown in FIG. 6.

In the present application, the width direction of the second switching part 1242 is parallel to the extending direction of the welding area 1246. The width of the second switching part 1242 at the first crease 1244 is not limited by the welding area 1246, and the second switching part 1242 can be widened as much as possible. When the width of the second switching part 1242 at the first crease 1244 is equal to the length of the chord line of the circular contour of the first switching part 1241, ensuring that the adapter 124 has a larger overcurrent capability at the first crease 1244, and thereby the internal resistance of the adapter 124 is reduced.

In some examples of the present application, the width of the second switching part 1242 at other positions is not less than the width of the second switching part 1242 at the first crease 1244, so as to further enhance the overcurrent capability of the adapter 124, and thereby the internal resistance of the adapter 124 is reduced.

The second switching part 1242 may be of any suitable shape, for example, a rectangle, a trapezoid, a hexagon, or the like. In some examples of the present application, as shown in FIG. 7, the second switching part 1242 is rectangular, and the width of the second switching part 1242 is equal everywhere.

In some examples of the present application, as shown in FIG. 7, both ends of the welding area 1246 extend to the edge of the first switching part 1241, so as to increase the length of the welding area 1246 as much as possible, and to ensure a larger contact area between the welding area 1246 and the electrode assembly 123, thus ensuring the stability of the connection between the welding area 1246 and the electrode assembly 123 and improving the overcurrent capability. Meanwhile, since the welding area 1246 is parallel to the first crease 1244, after the first switching part 1241 and the electrode assembly 123 are welded at the welding area 1246, the strength of the first switching part 1241 in the extending direction of the welding area 1246 is enhanced, so as to facilitate guiding the bending of the second switching part 1242 at the first crease 1244 relative to the first switching part 1241.

In some examples of the present application, as shown in FIG. 7, the welding area 1246 includes a plurality of sub-welding areas arranged at an interval along the Y direction. An area of the first switching part 1241 between two adjacent sub-welding areas along the Y direction is a non-welding area.

Setting the plurality of sub-welding areas allows to realize the welding of the first switching part 1241 and the electrode assembly 123 at multiple positions, increase the welding area between the first switching part 1241 and the electrode assembly 123, and ensure stability of the connection between the first switching part 1241 and the electrode assembly 123, thus ensuring the overcurrent capability.

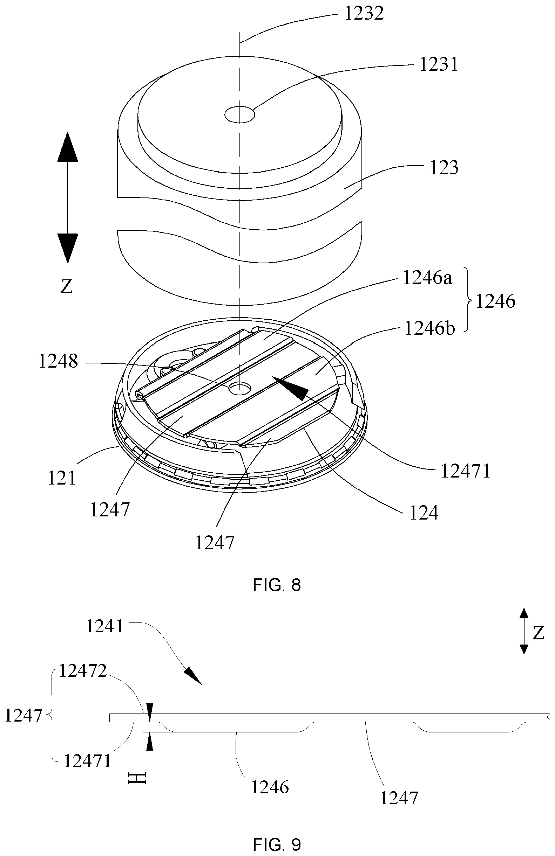

FIG. 8 shows a partially exploded view of the cylindrical battery cell 12 according to an example of the present application. In some examples of the present application, as shown in FIGS. 7 and 8, when the first switching part 1241 is provided with the plurality of sub-welding areas, the plurality of sub-welding areas include a first sub-welding area 1246a and a second sub-welding area 1246b that are adjacent. The first sub-welding area 1246a and the second sub-welding area 1246b are respectively located on both sides of the winding axis 1232 of the electrode assembly 123. The distance between the first sub-welding area 1246a and the second sub-welding area 1246b is smaller than the diameter of the winding center hole 1231 of the electrode assembly 123.

The electrode assembly 123 has a wound structure. The electrode assembly 123 has a winding center hole 1231. The first sub-welding area 1246a and the second sub-welding area 1246b are respectively located on both sides of the winding axis 1232 of the electrode assembly 123, namely, the winding axis 1232 passes through the non-welding area 1247 between the first sub-welding area 1246a and the second sub-welding area 1246b. When the distance between the first sub-welding area 1246a and the second sub-welding area 1246b is smaller than the diameter of the winding center hole 1231 of the electrode assembly 123, at least a partial area of the first sub-welding area 1246a and the second sub-welding area 1246b covers the winding center hole 1231 of the electrode assembly 123. In this way, the welding area 1246 enables the connection between the welding area 1246 and each round of the tabs formed by winding the electrode assembly 123, reducing polarization problems caused by some tabs that do not involve in overcurrent, and ensuring that the adapter 124 is connected with more tabs to improve the overcurrent capability of the adapter 124.

As shown in FIGS. 7 and 8, in order to facilitate realization of the installation and positioning of the adapter 124 and the electrode assembly 123, the first switching part 1241 is provided with a positioning hole 1248 corresponding to the winding center hole 1231 of the electrode assembly 123. When the adapter 124 is assembled with the electrode assembly 123, the positioning hole 1248 is aligned with the winding center hole 1231 of the electrode assembly 123 to achieve the positioning of the first switching part 1241 and the electrode assembly 123.

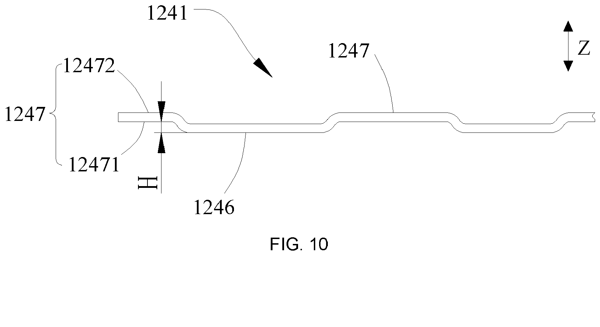

FIG. 9 shows a schematic structural view of the first switching part 1241 of the adapter 124 of the cylindrical battery cell 12 according to an example of the present application. FIG. 10 shows a schematic structural view of the first switching part 1241 of the adapter 124 of the cylindrical battery cell 12 according to another example of the present application. In some examples of the present application, as shown in FIGS. 7 to 10, the first switching part 1241 further includes a non-welding area 1247 having a first surface 12471 facing the electrode assembly 123 and a second surface 12472 facing away from the electrode assembly 123. The welding area 1246 protrudes from the first surface 12471. The areas of the first switching part 1241 out of the welding area 1246 are all non-welding areas 1247.

It can be understood that, as shown in FIGS. 9 and 10, the first surface 12471 and the second surface 12472 are disposed opposite to each other along the Z direction. The welding area 1246 protrudes from the first surface 12471. When the first switching part 1241 is assembled with the electrode assembly 123, the welding area 1246 can abut against the tabs of the electrode assembly 123, so as to facilitate the connection and fixing of the first switching part 1241 with the electrode assembly 123, thereby ensuring the welding quality of the first switching part 1241 and the electrode assembly 123. The non-welding area 1247 can facilitate the positioning of the first switching part 1241 by a positioning jig, so as to ensure the welding quality of the first switching part 1241 and the electrode assembly 123. For example, when the first switching part 1241 is provided with the positioning hole 1248, the positioning hole 1248 is located in the non-welding area 1247 corresponding to the winding center hole 1231.

In some examples of the present application, a protruding height H of the welding area 1246 from the first surface 12471 is 0.3-0.7 mm.

The welding area 1246 is a welding area for welding the first switching part 1241 and the tab of the electrode assembly 123. The protruding height of the welding area 1246 is selected to ensure the quality of welding with the tab of the electrode assembly 123, and to avoid occupying relatively large assembly space. If the protruding height of the welding area 1246 is small, the welding area 1246 is in poor contact with the tab, affecting the welding quality of the welding area 1246 and the tab; and if the protruding height of the welding area 1246 is great, the first switching part 1241 occupies relatively large assembly space, affecting energy density of the cylindrical battery cell. By setting the protruding height H of the welding area 1246 from the first surface 12471 to 0.3-0.7 mm, the quality of welding with the tab of the electrode assembly 123 can be ensured, and occupying relatively large assembly space can be avoided.

In some examples of the present application, as shown in FIG. 10, the welding areas 1246 are recessed in the second surface 12472. Since the welding operation is performed on the side of the first switching part 1241 away from the electrode assembly 123, the welding area 1246 is recessed in the second surface 12472, so that the welding area 1246 and the non-welding area 1247 have a clear contour boundary, namely, a welding contour is defined on the side of the first switching part 1241 facing away from the electrode assembly 123 to facilitate welding operation.

It should be noted that the features in the examples of the present application may be combined with each other without conflict.

The above descriptions are merely preferred examples of the present application, and are not intended to limit the present application. For those skilled in the art, the present application may have various modifications and changes. Any modification, equivalent replacement, improvement, and the like made within the spirit and principle of the present application shall be included within the protection scope of the present application.

## Claims

1. A cylindrical battery cell, **characterized by** comprising:
an adapter, configured to electrically connect an electrode assembly and an electrode terminal, the adapter comprising a first switching part and a second switching part, a first crease being provided between the first switching part and the second switching part, the first switching part comprising a welding area configured to weld with the electrode assembly, the welding area extending in a direction parallel to the first crease.

2. The cylindrical battery cell according to claim 1, wherein both ends of the welding area extend to an edge of the first switching part.

3. The cylindrical battery cell according to claim 1 or 2, wherein the first switching part further comprises a non-welding area having a first surface facing the electrode assembly and a second surface facing away from the electrode assembly, the welding area protruding from the first surface.

4. The cylindrical battery cell according to claim 3, wherein a protruding height of the welding area from the first surface is 0.3-0.7 mm.

5. The cylindrical battery cell according to claim 3 or 4, wherein the welding area is recessed in the second surface.

6. The cylindrical battery cell according to any one of claims 1 to 5, wherein the welding area comprises a plurality of sub-welding areas arranged at an interval along a direction perpendicular to the first crease.

7. The cylindrical battery cell according to claim 6, wherein the plurality of sub-welding areas comprise a first sub-welding area and a second sub-welding area that are adjacent, the first sub-welding area and the second sub-welding area being respectively located on both sides of a winding axis of the electrode assembly, a distance between the first sub-welding area and the second sub-welding area being smaller than a diameter of a winding center hole of the electrode assembly.

8. The cylindrical battery cell according to any one of claims 1 to 7, wherein a width of the first switching part at the first crease is equal to a width of the second switching part at the first crease, wherein a dimension of the first switching part along the direction parallel to the first crease is defined as the width of the first switching part, and a dimension of the second switching part along the direction parallel to the first crease is defined as the width of the second switching part.

9. The cylindrical battery cell according to claim 8, wherein a width of the second switching part at other positions is not less than a width of the second switching part at the first crease.

10. The cylindrical battery cell according to any one of claims 1 to 9, wherein the adapter further comprises a third switching part configured to connect with the electrode terminal, a second crease being provided between the third switching part and the second switching part.

11. A battery, **characterized by** comprising the cylindrical battery cell according to any one of claims 1 to 10.

12. An electric device, **characterized by** comprising the battery according to claim 11.
